# EUROPEAN PATENT APPLICATION

(11) **EP 4 435 625 A1**
(43) Date of publication of application: **25.09.2024**
(21) Application number: 24164639.7
(22) Date of filing: 19.03.2024
(51) Int. Cl.: G06F 16/2455

(54) **A SYSTEM AND A METHOD FOR ALLOCATING COMPUTING RESOURCES IN REAL TIME**

(30) Priority: 20.03.2023 US 202363491200 P
(71) Applicant: SQream Technologies Ltd., 6789139 Tel Aviv (IL)
(72) Inventor: LAVI, Yoram Yori, Tel Aviv (IL); SHOSHANI, Razi, Tel Aviv (IL)
(74) Representative: Balder IP Law, S.L.

(57) **Abstract**

The present invention provides a method for dynamically allocating computing resources in real time, said method comprising the steps of:
- Receiving plurality of dynamic/real time access or query SQL requests or DDL, DML activity from an entity to be executed in real time in a shared/central database;
- Checking required resources for executing said query;
- Checking resources availability, constrains;
- checking user profile and query context;
- applying dynamically in real time, predefined business rules for dynamically optimizing allocation of discrete/granular resources for plurality of currently access/SQL requests for predefined time period, said business rules define granular resources allocation based on query context, entity profile, time schedule , required resources for the query.

## Description

### BACKGROUND

### 1. TECHNICAL FIELD

The present invention relates generally a method for allocating computing resources in real time.

### Prior Art

In prior art the major point of scheduling tasks on heterogeneous systems was in predicting run time and/or maximizing throughput of the system.

### BRIEF SUMMARY

These, additional, and/or other aspects and/or advantages of the present invention are set forth in the detailed description which follows; possibly inferable from the detailed description; and/or learnable by practice of the present invention.

The present invention provides a method for dynamically allocating computing resources in real time, said method comprising the steps of:
- Receiving plurality of dynamic/real time access or query SQL requests or DDL, DML activity from an entity to be executed in real time in a shared/central database;
- Checking required resources for executing said query.
- Checking resources availability , constrains;
- checking user profile and query context;
- applying dynamically in real time, predefined business rules for dynamically optimizing allocation of discrete/granular resources for plurality of currently access/SQL requests for predefined time period, said business rules define granular resources allocation based on query context, entity profile, time schedule , required resources for the query

According to some embodiments of the present invention the context that is related to the query may include at least one of the following : type of action, user role, where is client location/IP, time of day, type of DB entities it engages with, hints within the query etc.);
According to some embodiments of the present invention the context includes query analysis checking usage optimization, compression, compress technique, pool defining functionality.
According to some embodiments of the present invention the method further comprising the step of managing pending requests, currently not allocated, wherein the resource allocation can be done periodically or triggered when resource availability changes.
According to some embodiments of the present invention the method further comprising the step of managing currently running requests, wherein the resource allocation is changed periodically or triggered when resource availability changes or incase bottleneck.

The present invention provides a method for dynamically allocating computing resources in real time, said method comprising the steps of:
- Receiving plurality of dynamic, real-time access or query SQL requests or DDL, DML activity from an entity to be executed in real time in a shared and central or distributed database;
- Checking required resources for executing said query;
- Checking resources availability, constrains;
- checking user profile and query context;
- applying dynamically in real time, predefined business rules for dynamically optimizing allocation of discrete/granular resources for plurality of currently access/SQL requests for predefined time period, said business rules define granular resources allocation based on query context, entity profile, time schedule and required resources for the query.

The method of claim 1 wherein the context that is related to the query is at least one of: type of action, user role, client location/IP, time of day, type of DB entities it engages with, hints within the query.
According to some embodiments of the present invention the method further comprising the steps of managing pending requests, currently not allocated, wherein the resource allocation can be done periodically or triggered when resource availability changes and managing currently running requests, wherein the resource allocation is changed periodically or triggered when resource availability changes or in case of bottleneck.
According to some embodiments of the present invention the method further comprising the step of managing pool resources size periodically or triggered when resource availability changes.
According to some embodiments of the present invention the method further comprising the step of identifying required resources Planning a Physical tree execution of the request based on determined logical tree and Boolean algebra.

According to some embodiments of the present invention the method further comprising the step of Planning Physical tree execution of the request and applying cost usage optimization
According to some embodiments of the present invention the step of optimizing resources allocation by applying business rules to a given workload at each time period of queries processing based on conflicting business needs of the different entities which initiate the queries.
According to some embodiments of the present invention the business needs are defined in term of : compute resources Minimum/maximum/rate of change, allocation rules for resolving conflict between different interpretation of business needs , checking options of enlarging or reducing allocation resources to each entity based on business context.
According to some embodiments of the present invention business rules take into account the entity identity type, entity location, functionality of the request , timing and priority restrictions of each entity.
According to some embodiments of the present invention the allocation rules are defined in relative or absolute terms, allocation in numbers or relative allocation or by economic resources evaluation.
The present invention disclose a system for dynamically allocating computing resources in real time, said method comprising the steps of:
   - Query handler configured for receiving plurality of dynamic, real time access or query SQL requests or DDL, DML activity from an entity to be executed in real time in a shared and central or distributed database;
   - QRTM module configured for checking required resources for executing said query checking resources availability, constrains and checking user profile and query context;
   - allocation module configured for applying dynamically in real time, predefined business rules for dynamically optimizing allocation of discrete/granular resources for plurality of currently access/SQL requests for predefined time period, said business rules define granular resources allocation based on query context, entity profile, time schedule and required resources for the query.

According to some embodiments of the present invention the context that is related to the query is at least one of: type of action, user role, client location/IP, time of day, type of DB entities it engages with, hints within the quer
According to some embodiments of the present invention the system further comprising a flow manger module configured to managing pending requests, currently not allocated, wherein the resource allocation can be done periodically or triggered when resource availability changes and to manage currently running requests, wherein the resource allocation is changed periodically or triggered when resource availability changes or in case of bottleneck.
According to some embodiments of the present invention the system further comprising a resources pool management module managing pool resources size periodically or triggered when resource availability changes.
According to some embodiments of the present invention the business needs are defined in term of: compute resources Minimum/maximum/rate of change, allocation rules for resolving conflict between different interpretation of business needs , checking options of enlarging or reducing allocation resources to each entity based on business context.

According to some embodiments of the present invention the business rules take into account the entity identity type, entity location, functionality of the request, timing and priority restrictions of each entity

According to some embodiments of the present invention the allocation rules are defined in relative or absolute terms, allocation in numbers or relative allocation or by economic resources evaluation.

According to some embodiments of the present invention the allocation module is further configured to optimize resources allocation by applying business rules to a given workload at each time period of queries processing based on conflicting business needs of the different entities which initiate the queries.

### BRIEF DESCRIPTION OF THE DRAWINGS

The present invention will be more readily understood from the detailed description of embodiments thereof made in conjunction with the accompanying drawings of which:
**Figure 1** illustrates a block diagram of computer source dynamic allocation, according to some embodiments of the invention.
**Figure 2** is a flow diagram QRTM Scheduling module processing, according to some embodiments of the invention.
**Figure** 3 is a flow diagram of the Resources pool management processing, according to some embodiments of the invention;
**Figure 4** is a flow diagram of the requests /SQL Analyzer/planner processing according to some embodiments of the invention; and
**Figure 5** is a flow diagram of Flow manger processing, according to some embodiments of the invention;
**Figure 6** is a flow diagram of the triggering module processing, according to some embodiments of the invention;
**Figure 7** is a flow diagram of the Query Handler module processing, according to some embodiments of the invention;

### DETAILED DESCRIPTION

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

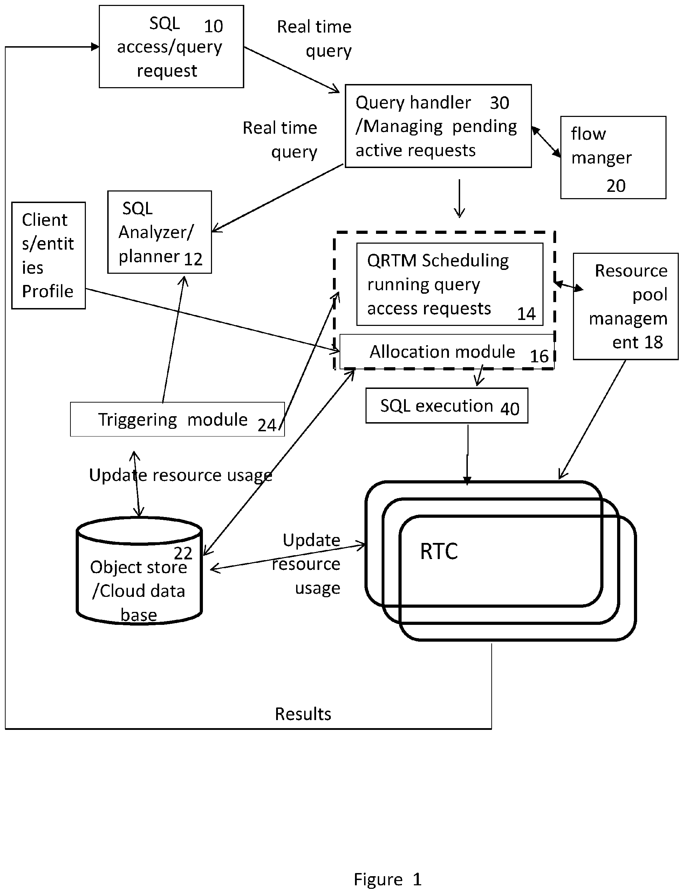

**Figure 1** illustrates a block diagram of computer resources dynamic allocation, according to some embodiments of the invention.

An SQL access/query request or Data Definition Language (DDL) or Data Manipulation Language (DML) instructions 10 is received from client entity having a known profile 42, the query or instruction request is received by the Query handler 30 for managing pending active requests . The flow manager 20 is configured for managing active queries and pending requests. The QRTM module 14 is configured for scheduling, running queries based on computer resources availability, resources user constrains, user profile and/or query context. The scheduling is determined by the allocation module 16 which is configured for applying dynamically in real time, predefined business rules for dynamically allocating discrete and/or granular computing resources.

The SQL execution 40 receives the instructions to from the QRTM, and activates the RTC for executing the queries based on execution tree.

The RTC main function is to manage the Execution tree and communicate with pre/post Queue.

Resource pool management 18 is configured to check currently running queries/tasks and checking resources availability and usage constrains.

The SQL Analyzer/planner 12, is configured to identify required resources, planning and scheduling a Physical tree execution.

The triggering module 24 check changes in resources usage and triggers allocation module in Object store /Cloud database 22 can be implement as shared database or distributed database.

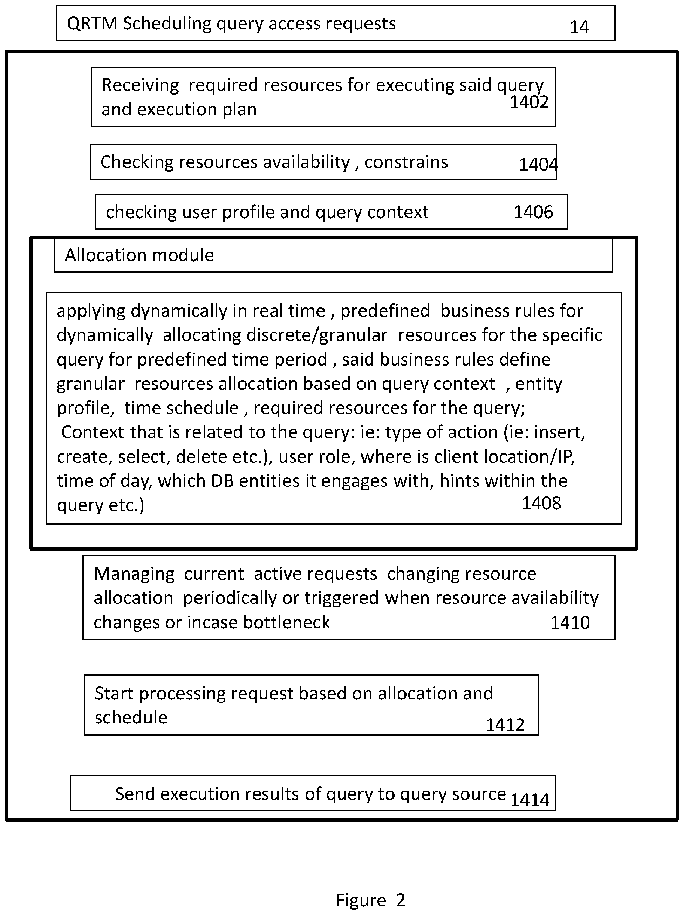

**Figure 2** is a flow diagram QRTM Scheduling module processing, according to some embodiments of the invention.

The QRTM Scheduling module apply at least one of the following steps:
Receiving required computer resources for executing said query and execution plan (1402);
Checking resources availability, usage constrains (1404);
Checking user profile and query context (1406);

The Allocation module initiated by the QRTM Scheduling module, apply the following steps:
applying dynamically in real time, predefined business rules for dynamically allocating discrete and/or granular commuter resources for the specific query for predefined time period, said business rules define granular computer resources allocation based on query context, entity profile, time schedule and/or, required computer resources for the specific query.

The query related context includes at least one of: type of action (i.e.: insert, create, select, delete etc.), user role, client location/IP, time of day, the type and Id of the required DB entities it engages with, hints within the query etc.) (1408);
The QRTM Scheduling module further apply the following steps:
Managing current active requests for changing computer resource allocation periodically or triggered when resource availability changes or in case of bottleneck (1410);
Start processing request based on allocation and schedule (1412);
Send execution results of query-to-query source '(1414).

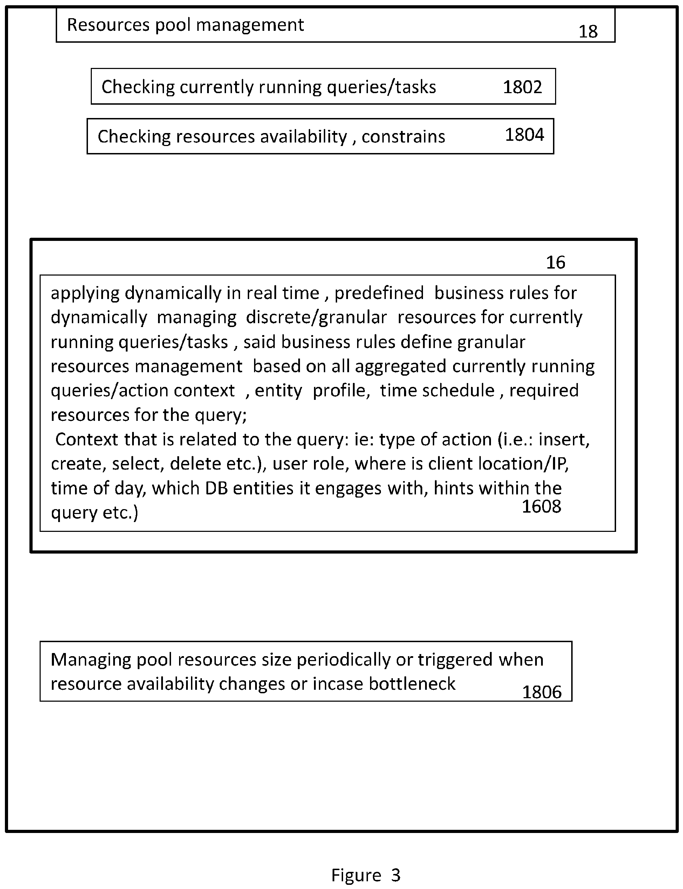

**Figure** 3 is a flow diagram of the Resources pool management processing, according to some embodiments of the invention.

The Resources pool management module apply at least one of the following steps:
Checking currently running queries/tasks (1802);
Checking computer resources availability, usage constrains (1804);

The Allocation module 16 is initiated by the Resources pool management, applying the at least one of following steps:
applying dynamically in real time, predefined business rules for dynamically managing discrete/granular computer resources for currently running queries/tasks, said business rules define granular resources management based on all aggregated currently running queries/action context, entity profile, time schedule and/or required resources for the query;
The query related context includes at least one of: type of action (i.e.: insert, create, select, delete etc.), user role, client location/IP, time of day, the type and Id of the required DB entities it engages with, hints within the query etc.)
Managing pool resources size periodically or triggered when resource availability changes or in case of bottleneck (1806);

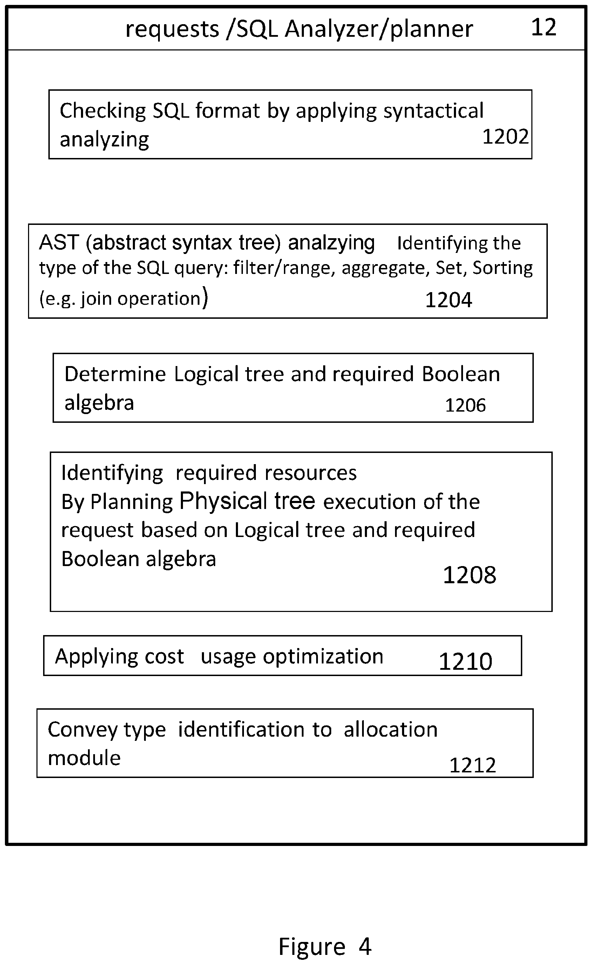

**Figure 4** is a flow diagram of the requests /SQL Analyzer/planner module processing according to some embodiments of the invention.

The SQL Analyzer/planner module 12 apply at least one of the following steps:
Lexical analyzer is configured for checking SQL format by applying Syntactical analyzer (1202);
AST (abstract syntax tree) analzying and Identifying the type of the SQL query: filter/range, aggregate, Set, Sorting (e.g. join operation (1204)
Identifying required resources Planning a Physical tree execution of the request based on determined logical tree and Boolean algebra; (1206, 1208);
Planning Physical tree execution of the request and applying cost usage optimization (1210)
Convey query type identification to allocation module (1212);

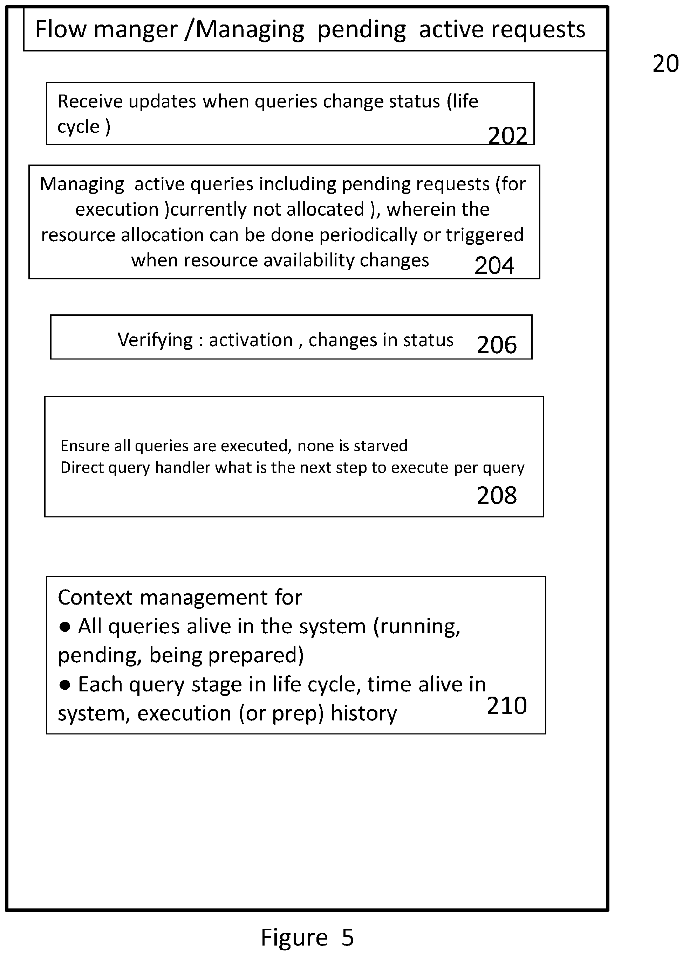

**Figure 5** is a flow diagram of Flow manger processing, according to some embodiments of the invention.

The flow manger applies at least one of the following steps:
Receiving updates when queries change status/state in their processing life cycle (202);
Managing active queries including pending requests (for execution) currently not allocated, wherein the resource allocation can be done periodically or triggered when resource availability changes (204);
Verifying queries activation and changes in status/state (206);
Ensure all queries are executed, none is starved and directing query handler what is the next step to execute per query (208);
Context management: Managing all queries alive in the system (running, pending, being prepared) for each query stage in life cycle, time alive in system, execution (or prep) history 210;

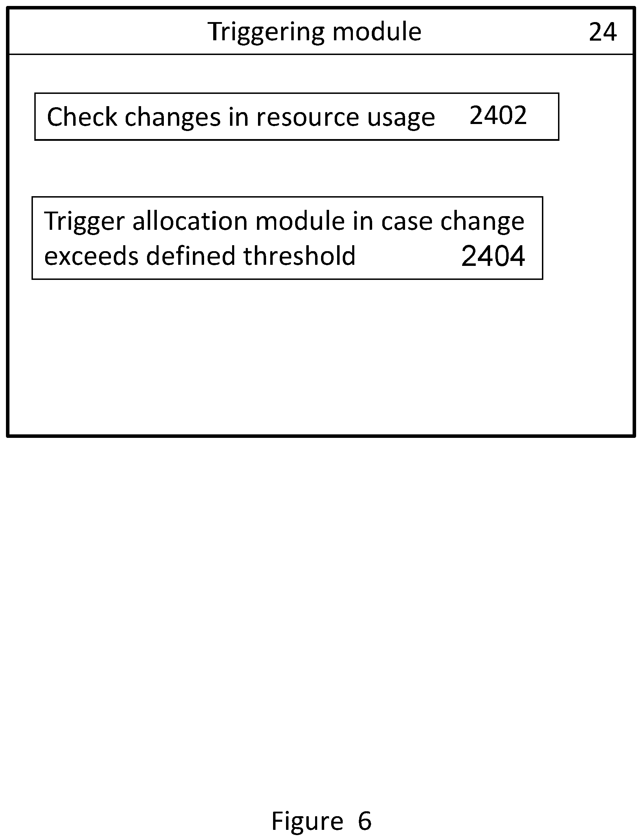

**Figure 6** is a flow diagram of the triggering module processing, according to some embodiments of the invention.

The triggering module apply at least one of the following steps:
check changes in resources usage 2402;
and triggers allocation module in case the change exceeds defined threshold (2404);

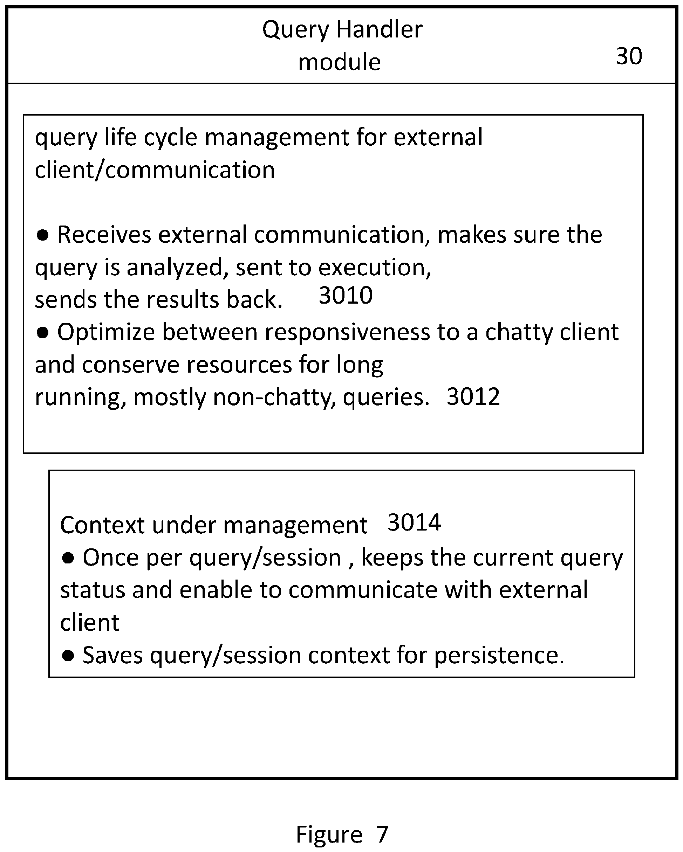

**Figure 7** is a flow diagram of the Query Handler module processing, according to some embodiments of the invention.

The Query Handler module apply at least one of the following steps:
- Query life cycle management for external client/communication: Receives external communication, makes sure the query is analyzed, sent to execution, sends the results back (3010);
- Optimize between responsiveness to a chatty client and conserve resources for long running, mostly non-chatty, queries (3012);
- Context under management: Once per query/session , keeps the current query status and enable to communicate with external client and saves query/session context for persistence (3014);

According to embodiments of the present invention the system optimizes resource allocation by applying business rules to a given workload at each time period of queries processing based on conflicting business needs of the different entities which initiate the queries.

The business needs are defined in term of : compute resources Minimum/maximum/rate of change, allocation rules for resolving conflict between different interpretation of business needs , Checking options of enlarging or reducing allocation resources to each entity based on business context:
The business rules take into account the entity identity type, entity location, functionality of the request, timing and priority restrictions of each entity The allocation rules can be defined in relative or absolute terms, allocation in numbers or relative allocation (e.g. half resources) or by economic resources evaluation Different resolution mechanism can be applied incase of aggregated requirements from different entities which can be satisfied within existing resources and a different mechanism can be applied where not all requirements can be made to fit existing available resources.

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Furthermore, it is to be understood that the invention can be carried out or practiced in various ways and that the invention can be implemented in embodiments other than the ones outlined in the description above.

The invention is not limited to those diagrams or to the corresponding descriptions. For example, flow need not move through each illustrated box or state, or in exactly the same order as illustrated and described.

Meanings of technical and scientific terms used herein are to be commonly understood as by one of ordinary skill in the art to which the invention belongs, unless otherwise defined.

## Claims

1. A method for dynamically allocating computing resources in real time, said method comprising the steps of:
- Receiving plurality of dynamic, real-time access or query SQL requests or DDL, DML activity from an entity to be executed in real time in a shared and central or distributed database;
- Checking required resources for executing said query;
- Checking resources availability, constrains;
- checking user profile and query context;
- applying dynamically in real time, predefined business rules for dynamically optimizing allocation of discrete/granular resources for plurality of currently access/SQL requests for predefined time period, said business rules define granular resources allocation based on query context, entity profile, time schedule and required resources for the query.

2. The method of claim 1 wherein the context that is related to the query is at least one of: type of action, user role, client location/IP, time of day, type of DB entities it engages with, hints within the query.

3. The method of claim 1 further comprising the steps of managing pending requests, currently not allocated, wherein the resource allocation can be done periodically or triggered when resource availability changes and managing currently running requests, wherein the resource allocation is changed periodically or triggered when resource availability changes or in case of bottleneck.

4. The method of claim 1 further comprising the step of managing pool resources size periodically or triggered when resource availability changes.

5. The method of claim 1 further comprising the step of identifying required resources Planning a Physical tree execution of the request based on determined logical tree and Boolean algebra.

6. The method of claim 1 further comprising the step of Planning Physical tree execution of the request and applying cost usage optimization

7. The method of claim 1 further comprising the step of optimizing resources allocation by applying business rules to a given workload at each time period of queries processing based on conflicting business needs of the different entities which initiate the queries.

8. The method of claim 1 wherein the business needs are defined in term of :
compute resources Minimum/maximum/rate of change, allocation rules for resolving conflict between different interpretation of business needs ,
checking options of enlarging or reducing allocation resources to each entity based on business context.

9. The method of claim 1 wherein the business rules take into account the entity identity type, entity location, functionality of the request, timing and priority restrictions of each entity.

10. A system for dynamically allocating computing resources in real time, said method comprising the steps of:
- Query handler configured for receiving plurality of dynamic, real time access or query SQL requests or DDL, DML activity from an entity to be executed in real time in a shared and central or distributed database;
- QRTM module configured for checking required resources for executing said query checking resources availability, constrains and checking user profile and query context;
- allocation module configured for applying dynamically in real time, predefined business rules for dynamically optimizing allocation of discrete/granular resources for plurality of currently access/SQL requests for predefined time period, said business rules define granular resources allocation based on query context, entity profile, time schedule and required resources for the query.

11. The system of claim 10 further comprising a flow manger module configured to managing pending requests, currently not allocated, wherein the resource allocation can be done periodically or triggered when resource availability changes and to manage currently running requests, wherein the resource allocation is changed periodically or triggered when resource availability changes or in case of bottleneck.

12. The system of claim 10 further comprising a resources pool management module managing pool resources size periodically or triggered when resource availability changes.

13. The system of claim 10 wherein the business needs are defined in term of:
compute resources Minimum/maximum/rate of change, allocation rules for resolving conflict between different interpretation of business needs ,
checking options of enlarging or reducing allocation resources to each entity based on business context.

14. The system of claim 10 wherein the business rules take into account the entity identity type, entity location, functionality of the request, timing and priority restrictions of each entity.

15. The systems of claim 10 wherein the allocation module is further configured to optimize resources allocation by applying business rules to a given workload at each time period of queries processing based on conflicting business needs of the different entities which initiate the queries.
